# EUROPÄISCHE PATENTANMELDUNG

(11) **EP 4 123 283 A1**
(43) Veröffentlichungstag der Anmeldung: **25.01.2023**
(21) Anmeldenummer: 21186907.8
(22) Anmeldetag: 21.07.2021
(51) Int. Cl.: G01M 5/00

(54) **MECHANISCHES KOPPLUNGSVERFAHREN FÜR SENSOREN ZUR ERFASSUNG MECHANISCHER SPANNUNGEN**

(71) Anmelder: Hahn-Schickard-Gesellschaft für angewandte Forschung e.V., 78052 Villingen-Schwenningen (DE)
(72) Erfinder: Fritz, Karl-Peter, 71101 Schönaich (DE); Grözinger, Tobias, 70191 Stuttgart (DE); Haybat, Mehmet, 71083 Herrenberg (DE); Hehn, Thorsten, 79276 Reute (DE); Mintenbeck, Dieter, 78052 VS-Rietheim (DE); Sikora, Axel, 79423 Heitersheim (DE)
(74) Vertreter: Hertin und Partner Rechts- und Patentanwälte PartG mbB

(57) **Zusammenfassung**

Die Erfindung betrifft bevorzugt ein Verfahren zur Kopplung eines Sensorchips an ein Bauteil zur Überwachung mechanischer Verformungen und/oder Spannungen. Der Sensorchip umfasst ein oder mehrere auf das Bulk-Substrat aufgebrachte Sensorelemente zur Messung einer auf den Sensorchip einwirkenden mechanischen Verformung und/oder Spannung. Durch ein mindestens teilweises Verkapseln des Sensorchips mit einem Duroplast-Material wird ein Duroplast-Package mit mindestens teilweise eingebettetem Sensorchip gebildet, welches an das zu überwachende Bauteil mechanisch gekoppelt wird. In weiteren Aspekten betrifft die Erfindung ein Duroplast-Package mit mindestens teilweise eingebetteten Sensorchips zur mechanischen Kopplung an ein überwachendes Bauteil sowie ein System umfassend ein Duroplast-Package mit mindestens teilweise eingebetteten Sensorchips und ein zu überwachendes Bauteil.

## Beschreibung

Die Erfindung betrifft bevorzugt ein Verfahren zur Kopplung eines Sensorchips an ein Bauteil zur Überwachung mechanischer Verformungen und/oder Spannungen. Der Sensorchip umfasst ein oder mehrere auf das Bulk-Substrat aufgebrachte Sensorelemente zur Messung einer auf den Sensorchip einwirkenden mechanischen Verformung und/oder Spannung. Durch ein mindestens teilweises Verkapseln des Sensorchips mit einem Duroplast-Material wird ein Duroplast-Package mit mindestens teilweise eingebettetem Sensorchip gebildet, welches an das zu überwachende Bauteil mechanisch gekoppelt wird. In weiteren Aspekten betrifft die Erfindung ein Duroplast-Package mit mindestens teilweise eingebetteten Sensorchips zur mechanischen Kopplung an ein zu überwachendes Bauteil sowie ein System umfassend ein Duroplast-Package mit mindestens teilweise eingebetteten Sensorchips und ein zu überwachendes Bauteil.

### Hintergrund und Stand der Technik

Die Erfindung betrifft das Gebiet von Sensoren zur Messung von Verformungen, Spannungen, Kräfte und/oder Drehmomenten.

Für die Überwachung der Zustände von mechanisch beanspruchten Strukturbauteilen oder Maschinen ist es beispielsweise erforderlich Kräfte und/oder Verformungen zu messen, um veränderliche Beanspruchungen zu erfassen und zu dokumentieren. Diese können beispielsweise aufgrund von zeitlichen Änderungen der Rand- und Betriebsbedingungen sowie der Werkstoffeigenschaften auftreten. Ebenso ist es zur funktionsgerechten Ausgestaltung und Dimensionierung von Baugruppen oder Maschinen erforderlich, Kenntnis über die Art der Beanspruchungen für die unterschiedlichen Verwendungsmuster zu haben. Maximal auftretende Spannungen können mittels Kraftsensoren ermittelt werden, um Abmessungen oder Materialparameter, wie die Steifigkeit festzulegen.

Beim *Structural Health Monitoring* (SHM) erfolgt insbesondere eine Überwachung statisch gelagerten Strukturen, beispielsweise von Brücken, Gebäuden, Flugzeugen, Automobilen oder Windkraftanlagen. Ziel des SHM ist es durch verschiedene Sensoren, welche zumeist zu einem Netzwerk zusammengeschlossen sind, kontinuierlich Daten über den Zustand eines zu überwachenden Objekts (z.B. eines Gebäudes) zu erfassen. Auf Basis der analysierten Sensordaten können zuverlässig auch langsam voranschreitende Schädigungsprozesse durch ständige mechanische Belastung detektiert werden, welche sich negativ auf die Sicherheit auswirken können.

Beim Condition Monitoring (CM) wird insbesondere der Zustand von Maschinen überwacht. Auf Basis der kontinuierlichen Messung von physikalischen Größen (wie Temperatur, Schwingungen, mechanischen Beanspruchungen) können schnell reagierende Sicherheitssysteme implementiert werden, welche bei fehlerhafter Ausführung durch rechtzeitig Notabschaltung strukturelle Schäden an der Maschine verhindern. Ebenso kann CM zur Sicherstellung der Maschineneffizienz genutzt werden, wobei basierend auf einer Überwachung des Maschinenzustands, eine verminderte Effizienz bestimmter Baugruppen festgestellt werden kann. Durch Reparatur oder Austausch der Baugruppe können negative Folgen für den Gesamtprozess vermieden werden.

Wünschenswert ist eine besondere kompakte Dimensionierung der Kraftsensoren, um Einflüsse auf die zu überwachenden Maschinen oder (Struktur-)Bauteile auszuschließen.

Ein klassischer Weg zur Messung von mechanischen Spannungen bzw. Verformungen sind Dehnungsmessstreifen (DMS).

Dehnungsmessstreifen basieren grundsätzlich auf der Änderung des elektrischen Widerstands durch Längen- und Querschnittsänderung. Wird ein DMS gedehnt, so nimmt sein Widerstand zu. Wird er gestaucht (negative Dehnung), so nimmt sein Widerstand R ab. Dabei gilt *dR*/*R* = *k·ε*, wobei *ε* der relativen Längenänderung entspricht.

Problemfelder metallischer DMS sind geringe k-Faktoren und resultierende geringe Empfindlichkeiten sowie die vergleichsweise große Baugröße des DMS und die damit verbundene schlechte Ortsauflösung. Insbesondere bei Rosetten, bei denen bedingt durch die Größe der DMS verschiedene Achsen an verschiedenen Orten gemessen werden, kann sowohl eine schlechte Ortsauflösung, als auch ein fehlerbehaftetes Ergebnis resultieren.

Wesentlich empfindlichere Messungen mit höheren k-Faktoren erlauben dahingegen Halbleiter-DMS. Jedoch ist die mechanische Anfälligkeit von Halbleiter-DMS sehr hoch. Die Montage ist daher aufwendig und es kommt nichtsdestotrotz oft zu einem Bruch des DMS. Außerdem werden Halbleiter DMS oft ganzflächig und steif an das zu vermessene Objekt angeklebt, nicht selten auch um die Stabilität des DMS zu erhöhen. Dabei können die mechanischen Eigenschaften des Klebers die Dehnungsmessung beeinflussen oder verfälschen.

Auch generell ergeben sich bei den bekannten DMS-Messmethoden häufig Probleme; insbesondere aus der Messanordnung bestehend aus einem oder zwei aktiven, relativ großen DMS an unterschiedlichen Orten auf dem Bauteil und Ergänzung einer Brückenschaltung durch passive Widerstände resultieren eine schlechte Temperaturkompensation und geringe Empfindlichkeiten.

Im Stand der Technik sind auch Siliziumchip basierte Sensoren bekannte, welche mehrere Sensorelemente aufweisen, um Spannungsverteilungen zu messen.

In Jaeger et al. 2000 werden Spannungsmessungen offenbart, welche auf dem piezoresistiven Verhalten CMOS-integrierter Feldeffektsensoren basieren. Die Schaltungen liefern temperaturkompensierte Messergebenisse, welche proportional zur Normalspannungsdifferenz (σₓₓ - σ_{yy}) und der Scherspannung (σ_{xy}) in einer Ebene sind. Die Verwendung der Silizium-Feldeffekttransistoren als Spannungssensoren bietet gegenüber konventionellen Widerstandselementen aufgrund ihrer geringen Größe, hohen Empfindlichkeit und einer Integrierbarkeit in aktive Schaltungen eine Reihe von Vorteilen und erlaubt gut lokalisierte Spannungszustandsmessungen.

Gieschke et al. 2009 schlagen CMOS-integrierten Sensoren vor, wobei piezoresistive Sensorbrücken mit analoger und digitaler Schaltungstechnik zum Einsatz kommen. Auf einem Sensorchip sind 32 piezoresistive Sensorbrücken als Sensorelemente verteilt und erlauben die Messung der Scherspannung (σ_{xy}) oder der Normalspannungsdifferenz (σₓₓ - σ_{yy}) in einer Ebene. Die Sensorelemente können als vier Transistoren beschrieben werden, welche im Quadrat als Wheatstone'sche Brücken angeordnet sind. Die Scherspannung wird von n-Kanal-basierten Transistoren bestimmt, wobei die Sensorbrücke um 45° zu einem (x,y)-Koordinatensystem gedreht vorliegt, während p-Kanal-basierten Transistoren als Sensorbrücke parallel zum Koordinatensystem angeordnet vorliegen und die Normalspannungsdifferenz messen.

Kuhl et al. 2013 beschreiben Sensorchips, welche auf der Technologie von Gieschke et al. 2009 aufbauen. Die piezoresistiven Sensorbrücken liegen als quadratische Feldeffekttransistoren (FET, bevorzugt MOSFET) mit vier Source/Drain-Kontakten (Piezo-FETs) ausgestaltet vor, die den piezoresistiven Schereffekt in n-Typ (NMOS) oder p-Typ (PMOS) Inversionsschichten ausnutzen. Zur Messung der Scherspannung σ_{xy} werden bevorzugt NMOS-Sensorelemente und zur Messung der Normalspannungsdifferenz (σₓₓ - σ_{yy}) PMOS-Sensorelemente verwandt. Auf einem Sensorchip sind 24 solcher piezoresistiven Sensorbrücken als Sensorelemente verteilt. Zehn NMOS-Typ Sensorelemente messen die Scherspannung und vierzehn PMOS-Typ Sensorelemente die Normalspannungsdifferenz.

Um mittels der Sensorchips eine mechanische Beanspruchung der zu überwachenden Bauteile erfassen zu können, ist eine mechanische Kopplung der Sensoren an die Bauteile notwendig.

Im Stand der Technik ist es hierzu bekannt, die Sensorchips durch Kleben, beispielsweise mittels einer Klebefolie, oder durch reaktives Fügen mit den Bauteilen mechanisch zu koppeln. Nachteilig an einem reaktiven Fügen ist es, dass hierbei zusätzlicher Stress in den Sensorchip eingebracht wird, welcher die Sensitivität vermindert. Beim Kleben ist die Einbringung von zusätzlichem Stress weniger stark ausgeprägt.

Viele Kleber weisen jedoch den Nachteil auf, dass deren mechanischen Eigenschaften sich mit der Zeit verändern bzw. driften. Durch das Driften verändert sich insbesondere auch die Übertragungsfunktion zwischen dem zu überwachenden Bauteil und dem Sensorchip. Langzeitstabile Messungen werden erschwert. Eine Alternative bestünde darin nichtdriftendes Glas oder Kleber zu verwenden. Die resultierende Sprödigkeit an der Position der Kopplung des Sensorchips an das Bauteil kann jedoch zu Brüchen führen.

Im Lichte des Standes der Technik besteht somit ein Bedarf an verbesserten Verfahren zur Kopplung von Sensoren zur Überwachung mechanischer Verformungen und Spannungen an die zu überwachenden Bauteile.

### Aufgabe der Erfindung

Aufgabe der Erfindung ist es ein Verfahren und eine Vorrichtung bereitzustellen, welche die Nachteile des Standes der Technik beseitigen. Insbesondere ist es eine Aufgabe der Erfindung ein Verfahren zur Kopplung eines Sensorchips an ein Bauteil zur Überwachung mechanischer Verformungen und Spannungen bereitzustellen, welches eine hohe Langzeitstabilität, driftarme Kopplung und hohe Sensitivität gewährleistet und sich vorzugsweise zudem auf einfache, kostengünstige und robuste Weise ausführen lässt.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem Aspekt betrifft die Erfindung bevorzugt ein Verfahren zur Kopplung eines Sensorchips an ein Bauteil zur Überwachung mechanischer Verformungen und Spannungen umfassend die Schritte
a. Bereitstellung eines Sensorchips, umfassend ein oder mehrere auf das Bulk-Substrat aufgebrachte Sensorelemente zur Messung einer auf den Sensorchip einwirkenden mechanischen Verformung und/oder Spannung, sowie bevorzugt eine elektronische Schaltung
b. Mindestens teilweises Verkapseln des Sensorchips mit einem Duroplast-Material zur Bildung eines Duroplast-Package mit mindestens teilweise eingebettetem Sensorchip
c. Mechanische Kopplung des im Duroplast-Package mindestens teilweise eingebetteten Sensorchips an das zu überwachende Bauteil.

Durch die Bildung eines Duroplast-Package mit mindestens teilweise eingebettetem Sensorchip wird eine besonders langzeitstabile, driftarme und kraftsensitive Ankopplungsmöglichkeit des Sensorchips an das zu überwachende Bauteil ermöglicht.

Zum einen werden über das Duroplast-Package mechanische Beanspruchungen in reproduzierbarer Weise auf den Sensorchip übertragen, so dass die Messdaten der Sensorelemente präzise Rückschlüsse auf Verformungen oder Spannungen, welche auf das Bauteil wirken, erlauben. Besonders hervorzuheben ist in dieser Hinsicht die ausgezeichnete Langzeitstabilität und der geringe Drift von mit geeigneten Füllstoffen versehenen Duroplasten, wie sie beispielsweise als Epoxy-Molding-Compounds für die Herstellung von Duroplast-Packages verwendet werden, als mechanische Kopplungsmaterialien.

Vorteilhaft wurde erfindungsgemäß erkannt, dass die Duroplast-Packages insbesondere für eine mechanische Kopplung des Sensorchips an ein Bauteil zum einen starr genug sind, um nicht zu driften. Zum anderen sind die Duroplast-Packages nicht zu starr, um nicht spröde zu werden und zu brechen. Als Resultat wird eine ausgezeichnete langzeitstabile Übertragungsfunktion für mechanische Beanspruchungen (Kräfte, Spannungen, Verformungen) zwischen dem überwachenden Bauteil und dem Sensorchip gewährleistet.

Im Gegensatz zu alternativen Ansätzen wie einem Kleben oder reaktiven Fügen, können vorteilhaft somit über lange Zeiträume zuverlässig Messdaten über die mechanische Beanspruchung erhalten werden, ohne dass eine erneute Kalibrierung der Übertragungsfunktion notwendig wird.

In dieser Hinsicht zeichnen sich Duroplaste zudem durch eine besondere mechanische, thermische, und chemische Robustheit aus. Neben einer hochtemperaturbeständigen Polymermatrix mit vergleichsweise sehr niedriger Viskosität bei der Verarbeitung im flüssigen Zustand und hervorragenden Adhäsionseigenschaften zu vielen Werkstoffen können die Eigenschaften der Duroplaste durch eine Vielzahl von zur Verfügung stehenden Füllstoffen, wie z. B. Glasfasern, Glasperlen, Wollastonit, Talkum, Kaolin, Aluminiumoxid, Glimmer in unterschiedlichsten Größen und Formen, mit hohen Füllgraden von bis zu über 80 Gewichtsprozent angepasst werden.

So ergeben sich im Vergleich zu Thermoplasten insbesondere dünnere Wandstärken, geringere herstellungsbedingte Schwindungen, höhere thermische und mechanische Belastbarkeit, höhere Maßhaltigkeit, geringere thermische Ausdehnungen, geringere Relaxationseigenschaften und höhere Wärmeleitfähigkeit gepaart mit einer guten Anpassbarkeit an Kundenanforderungen.

Aufgrund der positiven Eigenschaften werden Duroplaste im Stand der Technik bereits zur mediendichten Verkapselung von Temperatursensoren und Steuerungselektronik für den Einsatz in rauen Umgebungen wie beispielsweise Steuerungen in Motor- und Getriebeöl mit hohen Temperaturanforderungen und üblicherweise hohen Additivanteilen, welche korrosiv wirken (u.a. Schwefelanteile), verwandt.

Nicht bekannt ist im Stand der Technik eine Verwendung von Duroplasten zur mechanischen Kopplung eines Spannungs- oder Kraftsensors an ein zu überwachendes Bauteil. Eine solche Verwendung wird durch einen möglichen Einsatz von Duroplasten zur mediendichten Verkapslung für einen Fachmann auch nicht nahelegt.

Bei einer mediendichten Verkapselung kommt es in erster Linie darauf an, den Mikrochip vor äußeren Einflüssen zu schützen und somit mechanische Beanspruchung von außen über ein Duroplast-Package gerade zu verhindern.

Erst erfindungsgemäß wurde erkannt, dass ein Duroplast-Package - insbesondere bei geeigneter Dimensionierung einer Koppelzone - sich auf überraschend effiziente Weise als driftarmes mechanisches Kopplungsmaterial für einen Spannungssensor eignet. So zeichnet sich das Duroplast-Package neben einer Langzeitstabilität durch eine optimierte Kraftübertragung von dem Bauteil auf den Sensorchip aus, um einen hohen Anteil der im Bauteil vorherrschenden mechanischen Spannungen an den Sensorchip durchzuleiten.

Weiterhin ist durch Möglichkeit der Einbettung des Sensorchips mit einem Duroplast-Material ein geringer Verzug des Duroplast-Package sowie ein geringer Stresseintrag im Interface zwischen dem Duroplast und Sensorchip zu verzeichnen. Somit kann der im Duroplast verkapselte Sensorchip in seinem optimalen Messbereich arbeiten und die Gefahr von Delaminationen im Interface wird geringgehalten.

Für die Einbettung des Sensorchips in einem Duroplast-Material kann zudem auf eine Reihe etablierter Verfahren zurückgegriffen werden. Beispielsweise kann ein Transfer-Molding, Film Assisted Transfer Molding oder Duroplast-Spritzgießen zum Einsatz kommen.

Das erfindungsgemäße Verfahren zeichnet sich somit nicht nur durch die Bereitstellung einer besonders langzeitstabilen und driftarmen mechanischen Kopplung, sondern zudem durch eine zuverlässige, kostengünstige und robuste Umsetzung aus.

Eine mechanische Kopplung meint im Sinne der Erfindung bevorzugt eine kraft- und/oder formschlüssige Verbindung zwischen dem in einem Duroplast-Package eingebetteten Sensorchip und dem zu überwachenden Bauteil aus. Die kraft- und/oder formschlüssige Verbindung wird über das Duroplast-Package vermittelt und kann auf sehr unterschiedliche Weise gewährleistet werden.

In einer bevorzugten Ausführungsform ist das Verfahren dadurch gekennzeichnet, dass die mechanische Kopplung des im Duroplast-Package eingebetteten Sensorchips an das zu überwachende Bauteil mittels einer Klebung, Verschraubung, Klemmung, Aufschrumpfung und/oder einer Integration in das Bauteil erfolgt.

Die mechanische Kopplung ist vorzugsweise ebenfalls auf eine optimierte Kraftübertragung vom Bauteil auf das Duroplast-Package gekennzeichnet.

Für die Klebung kommen insbesondere Kleber mit hoher Haftfestigkeit in Betracht, um eine stabile, vorzugsweise unlösbare Verbindung zwischen dem Duroplast-Package und dem Bauteil zu schaffen. Der Kleber kann hierbei teilweise an der Koppelzone zwischen Duroplast-Package und Sensorchip angeordnet vorliegen. Es kann aber ebenso bevorzugt sein, dass das Duroplast-Package vorzugsweise an Bereichen außerhalb der Koppelzone - beispielsweise an dazu eingerichteten Laschen - mit dem Bauteil verklebt wird.

Durch eine Verschraubung oder Verklemmung des Duroplast-Package kann ebenfalls eine besonders stabile mechanische Kopplung zwischen Duroplast-Package und dem Bauteil gewährleistet werden.

Für eine Verschraubung weist das Duroplast-Package vorzugsweise eine oder mehrere Laschen auf, an denen die Schraubverbindung erfolgen kann.

Eine Verklemmung kann vorzugsweise ebenfalls an einer oder mehrerer Laschen des Duroplast-Package ansetzen. Ebenso kann es aber auch bevorzugt sein, dass ein Duroplast-Package ohne Laschen mittels einer Klammer (z.B. einer Nonius-Klammer) am Bauteil fixiert wird. Eine Klammer meint bevorzugt ein elastisches Element, welches durch Ausübung einer Rückstellkraft das Duroplast-Package an das Bauteil presst (eine Klemmkraft generiert).

Bei einer Aufschrumpfung weist das Bauteil vorzugsweise eine Aufnahme für das Duroplast-Package mit mindestens teilweise eingebettetem Sensorchip auf, welche mit einer Übermaßpassung gefertigt ist. Die innere Form der Aufnahme korrespondiert zur Außenform des Duroplast-Packages, ist jedoch bei Raumtemperatur geringfügig zu klein dimensioniert, als dass das Duroplast-Package in die Aufnahme passen würde. Durch Erwärmen des Bauteils kann die Aufnahme ausgedehnt werden, sodass das Duroplast-Package eingebracht werden kann. Beim Erkalten des Bauteils schließt sich selbiges an der Stelle der Aufnahme, um das Duroplast-Package, sodass durch die Schrumpfung eine feste Pressverbindung geschaffen wird.

Vorteilhaft kann die Verklemmung, Verschraubung oder auch Aufschrumpfung derart gestaltet werden, dass an einer Koppelzone das Duroplast-Package unmittelbar das Bauteil kontaktiert. Eine Zwischenschicht eines Klebers ist nicht notwendig, wodurch ein besonders hoher Anteil der im Bauteil vorherrschenden mechanischen Spannungen von dem Bauteil auf das Duroplast und weiter in den Sensorchip eingeleitet werden kann.

In einer besonders bevorzugten Ausführungsform erfolgt die mechanische Kopplung durch eine mindestens teilweisen Integration des Duroplast-Packages in das Bauteil. Zu diesem Zweck können insbesondere Spritzgießverfahren zum Einsatz kommen, bei denen der im Duroplast-Package mindestens teilweise eingebettete Sensorchip im Zuge der Fertigung des Bauteils mindestens teilweise von selbigem ummantelt wird.

In einer bevorzugten Ausführungsform wird das Bauteil mindestens bereichsweise in einem Spritzgießverfahren geformt, wobei der im Duroplast-Package eingebettete Sensorchip in dem Spritzgießverfahren in das Bauteil mindestens teilweise oder vollständig integriert wird.

In einer besonders bevorzugten Ausführungsform wird das Bauteil mindestens bereichsweise aus einem Thermoplast geformt, wobei der im Duroplast-Package eingebettete Sensorchip durch ein Thermoplast-Spritzgießverfahren in das Bauteil mindestens teilweise oder vollständig integriert wird.

Ein Spritzguss, vorzugsweise ein Thermoplast-Spritzguss, bietet insbesondere für Kunststoffbauteile eine integrierten Überwachung von komplexeren Spannungszuständen innerhalb des Bauteiles.

Im Gegensatz zu Dehnungsmessstreifen, welche Spannungen lediglich an der Oberfläche messen, können somit auch interne Spannungs- oder Verformungsmessungen vorgenommen werden. Die Integration des Sensorchips mittels eine Spritzguss-Verfahrens erlaubt daher eine dreidimensionale Erfassung der Spannungen an den jeweiligen Orten der Kraftwirkung. Hierdurch kann beispielsweise sowohl beim *structural health monitoring,* als auch beim *condition monitoring* deutlich präziser die mechanischen Beanspruchungszustände der tragenden Strukturbauteile oder Bauteile innerhalb von komplexen (Werkzeug-)maschinen erfasst werden.

Versuche haben gezeigt, dass eine direkte Einbettung eines Sensorchips durch Umspritzen mit einem Thermoplast nicht zu gewünschten Ergebnissen führt. Zum einen kann die erhöhte Temperatur im Spritzguss-Verfahren nachteilig auf die Funktionalität des Sensorchips auswirken und einen Stresseintrag bedingen. Zudem hat sich gezeigt, dass der Sensorchip bei einer direkten Integration in ein Bauteil aus einem Thermoplast keine ausreichende Haftung aufweist. Eine inhomogene mechanische Kopplung führt zu einer unzureichenden bzw. schwankenden Übertragung der mechanischen Beanspruchungen auf den Sensorchip, sodass die Aussagekraft der Messergebnisse beschränkt ist.

Von den Erfindern wurde erkannt, dass ein mindestens teilweises Einbetten des Sensorchips in ein Duroplast-Package als Zwischenschritt eine Kompatibilität zum weit verbreiteten und kostengünstigen Thermoplast-Spritzguss erlaubt.

Thermoplaste zeichnen sich insbesondere durch kurze Prozessdauern aus und erlauben einen hohen Fertigsatz. Ein mittels des Duroplast-Package eingebetteter Sensorchip kann somit auf kostengünstige, robuste Weise unmittelbar im Fertigungsprozess des Bauteils integriert werden. Gesonderte Verfahrensschritte zur mechanischen Kopplung des Sensorchips sind vorteilhaft nicht notwendig, so dass auch damit im Zusammenhang stehende Fehlerquellen minimiert werden.

Vorteilhaft vermittelt das Duroplast-Package selbst eine ausgezeichnete Haftung zum Thermoplast, ohne dass hierzu zusätzliche Kleberschichten nötig wären. Es kann aber auch bevorzugt sein, dass das Duroplast-Package eine Oberflächenmodifizierung wie z.B. eine Verzahnung aufweist, welche einen Formschluss bzw. eine Haftung zum Thermoplasten zusätzlich unterstützt.

In bevorzugten Ausführungsformen weist das Duroplast-Package eine Oberflächenmodifizierung auf, um einen Formschluss bzw. eine Haftung an einen Thermoplasten zu erhöhen. Eine derartige Oberflächenmodifizierung erhöht bevorzugt die Rauigkeit der Oberfläche des Duroplast-Package, wobei die Rauigkeit ein Maß für die Unebenheit der Oberflächenhöhe des Duroplast-Package darstellt. Die Rauigkeit kann bevorzugt als mittlere Rauigkeit, quadratische Rauigkeit oder gemittelte Rauigkeit quantifiziert werden.

Die Oberflächenmodifizierung kann bevorzugt auch in einem gezielten Einbringen von Strukturen bestehen, welche die Unebenheit der Oberflächenhöhe des Duroplast-Package erhöhen. Hierzu gehören insbesondere Verzahnungen, Zapfen, Federn oder andere Erhebungen oder Vertiefungen welche bevorzugt im Wesentlichen senkrecht zur Oberfläche des Duroplast-Packages angebracht werden und eine Haftung zum Thermoplasten erhöhen.

Begriffe wie im Wesentlichen, ungefähr, etwa, ca. etc. beschreiben bevorzugt einen Toleranzbereich von weniger als ± 20%, bevorzugt weniger als ± 10%, besonders bevorzugt weniger als ± 5 %, noch stärker bevorzugt weniger als ± 3% und insbesondere weniger als ± 1%.

Unter dem Begrifft Thermoplast oder thermoplastische Polymere werden insbesondere Kunststoffe bzw. Polymere verstanden, welche in einem erhöhten Temperaturbereich formbar werden und beim Abkühlen wieder erstarren (*thermo-plastische* Verformung). Thermoplaste sind zumeist aus wenig oder nicht verzweigten, also linearen Kohlenstoffketten aufgebaut, die nur durch schwache physikalische Bindungen miteinander verbunden sind. Bei steigender

Temperatur werden die physikalischen Bindungen geschwächt, so dass eine viskose Flüssigkeit entsteht. In diesem Zustand können Thermoplaste umgeformt werden und werden typischerweise zur Herstellung von Teilen durch verschiedene Polymerverarbeitungstechniken wie Spritzgießen, Formpressen und Extrudieren verwendet. Im Gegensatz zu duroplastischen Polymeren ist die thermoplastische Verformung reversibel, solange nicht durch Überhitzung eine thermische Zersetzung des Materials einsetzt. Nicht beschränkende Beispiele von Thermoplasten umfassen Polystyrol (PS), Polyamid (PA), Polyurethan (PU), Polyethylen (PE), Polyphenylensulfid (PPS), flüssigkristalline Polymere (LCP), Polybutylenterephthalat (PBT), syndiotaktisches Polystyrol (sPS) oder Polymethacrylsäureester.

Duroplaste bezeichnet bevorzugt Kunststoffe, die nach ihrer Aushärtung durch Erwärmung oder andere Maßnahmen nicht mehr verformt werden können. Duroplaste enthalten bevorzugt harte, glasartige Polymere bzw. Polymerwerkstoffe, welche über kovalente Bindungen engmaschig vernetzt sind. Die Vernetzung erfolgt zumeist beim Mischen von Vorprodukten (Prepolymeren) mit Verzweigungsstellen, welche mit Hilfe von Härtern und gegebenenfalls Katalysatoren chemisch oder bei hohen Temperaturen thermisch aktiviert werden. Die Polymerisation führt zu einer engmaschigen Vernetzung. Während des Aushärtungsprozesses bilden sich im Gegensatz zu Thermoplasten mithin irreversible chemische Bindungen. (ausgehärtete) Duroplaste schmelzen daher bei einem (erneuten) Erhitzen nicht, sondern zersetzen sich typischerweise.

Im Sinne der Erfindung bezeichnet der Begriff "Duroplast-Material" bevorzugt eine Zusammensetzung aus Vorprodukten (Prepolymere) sowie ggf. Härtern, Katalysatoren, Füll- oder Farbstoffen, welche durch thermische oder chemische Aktivierung zu einem Duroplast polymerisieren.

Das mindestens teilweises Verkapseln des Sensorchips mit einem Duroplast-Material fasst im Sinne der Erfindung somit bevorzugt Verfahrensschritte zusammen, welche eine Bereitstellung einer Zusammensetzung umfassend Vorprodukte (sowie ggf. Härtern, Katalysatoren oder Füllstoffe) als ein Duroplast-Material, ggf. vorwärmen des Duroplast-Materials zur Verflüssigung, ein mindestens teilweises Umschließen des Sensorchips mittels dem Duroplast-Material sowie eine anschließende Aktivierung des Duroplast-Materials zu einem Duroplast(-Package) durch polymerisieren bzw. aushärten.

Das ausgehärte Duroplast-Material, welches den Sensorchip mindestens teilweise umschließt bzw. einbettet, wird im Sinne der Erfindung bevorzugt als "Duroplast-Package" bezeichnet.

In einer bevorzugten Ausführungsform umfasst das Duroplast-Material Kunstharze, bevorzugt ausgewählt aus der Gruppe bestehend aus, Polyesterharze, Phenolharze, Epoxidharze, Acrylatharze und Silikonharze. Die Kunstharze weisen Verzweigungsstellen auf, welche mit Hilfe von Härtern und gegebenenfalls Katalysatoren chemisch oder bei hohen Temperaturen thermisch zur Vernetzung aktiviert werden.

Der Fachmann kennt geeignete Kunstharze. Epoxidharze sind beispielsweise Oligomere oder Polymere mit mindestens zwei Epoxidgruppen im Molekül. Hierzu gehören zum Beispiel Epoxidharze vom Bisphenoltyp wie Bisphenol-A-Epoxidharz und Bisphenol-F-Epoxidharz; Epoxidharze vom Novolaktyp wie etwa Phenol-Novolak-Epoxidharz und Kresol-Novolak-Epoxidharz; sowie Naphthalin-Epoxidharze, Triphenolalkan-Epoxidharze, Biphenyl-Epoxidharze, Phenolaralkyl-Epoxidharze, Biphenylaralkyl-Epoxidharze, Cyclopentadien-Epoxidharze, Epoxidharze des Dicyclopentadien-Typs, Epoxidharze des GlycidylesterTyps, cycloaliphatische Epoxidharze, heterocyclische Epoxidharze oder halogenierte Epoxidharze.

Der Fachmann kennt auch geeignete Härter (bzw. Härtekomponenten) oder Katalysatoren (bzw. Beschleuniger), wozu beispielsweise Polyamine, Carbonsäureanhydride, Carbonsäuren, Dicarbonsäureanhydriden, Imidazole, Organophosphine, Urease, Lewissäuren und deren organische Salze gehören.

In einer bevorzugten Ausführungsform umfasst das Duroplast-Material einen oder mehrere Füllstoffe, vorzugsweise anorganische Füllstoffe, wobei die Füllstoffe besonders bevorzugt ausgewählt sind aus der Gruppe Glasfasern, Glasperlen, Wollastonit, Talkum, Kaolin und/oder Metalloxide, bevorzugt Aluminiumoxid. Mittels der Füllstoffe können die gewünschten mechanischen Eigenschaften, wie eine hohe Kriechbeständigkeit, des resultierenden Duroplast-Package gezielt eingestellt. Die Füllstoffe können in bevorzugten Ausführungsformen in einer Menge der Gesamtmenge des Duroplast-Materials von mehr als 20 Gew.-%, 40 Gew.-%, 60 Gew.-% oder mehr und/oder in einer Menge der Gesamtmenge des Duroplast-Materials von weniger als 95 Gew.-%, 90 Gew.-%, 80 Gew.-% oder weniger vorliegen.

In einer besonders bevorzugten Ausführungsform ist das Duroplast-Material ein Epoxid-Gießharz (*Epoxy Molding Compound, EMC*), umfassend bevorzugt ein Epoxidharz, ein Härter, einen Katalysator und/oder einen Füllstoff.

Zum mindestens teilweisen Verkapseln des Sensorchips mit einem Duroplast-Material können verschiedene Verfahren zum Einsatz kommen.

In einer bevorzugten Ausführungsform erfolgt das mindestens teilweise Verkapseln des Sensorchips mit einem Duroplast-Material durch ein Formgießen (*molding*), wobei bevorzugt ein Duroplast-Spritzgießen oder ein Transfer Molding oder ein Film Assisted Molding zum Einsatz kommt.

Das Verfahren des Transfer-Molding umfasst vorzugsweise die Bereitstellung eines Formwerkzeuges, umfassend ein Ober- und ein Unterteil, einen Stempel (zur Verdrängung des Duroplast-Materials), eine Aufnahmewanne für das Duroplast-Material (z.B. in Form von Pellets), Heizelemente zur Einstellung der Werkzeugtemperatur sowie einer Kavität, in welche der Sensorchip eingelegt wird.

Nach dem Schließen wird das Formwerkzeuges erhitzt, sodass das Duroplast-Material (z.B. EMC-Pellets) aufgeschmolzen und nach einer definierten Aufheizzeit durch einen Stempel in die Kavität eingepresst wird. Dieser Prozess wird auch als Transferprozess bezeichnet und endet mit einer Füllung der Kavität. Der Aushärteprozess bzw. die Vernetzung des Duroplast-Materials findet in der Kavität statt.

Ein Vorteil des Transfer-Molding liegt in den geringen Fülldrücken, die während der Verarbeitung aufgebracht werden, wodurch ein geringer Druck oder Verzug auf den Sensorchip gewährleistet werden kann.

Das Film-Assisted Transfer-Molding ist eine Weiterentwicklung des Transfer-Moldings.

Eine Anlage zum Film-Assisted Transfer-Molding besitzt bevorzugt dieselben Funktionen wie konventionelle Transfer-Molding-Maschinen. Zusätzlich verfügt die Anlage über ein Folienfördersystem, über das üblicherweise eine auf Teflon basierende Folie (z.B. Ethylentetrafluorethylen: ETFE) transportiert wird.

Der Vorteil ist, dass die hervorragenden Antihafteigenschaften des Teflons die Adhäsion der Duroplast-Schmelze beim Verarbeitungsprozess verhindert. Damit wird der Werkzeugverschleiß reduziert, die Werkzeugstandzeit erhöht und ein Verchromungsschritt der Werkzeuge zur Verschleißminimierung eingespart.

Mittels Transfer-Molding oder Film-Assisted Transfer-Molding werden zuverlässig typischerweise einfache, flache Formen eines Duroplast-Package erzielt.

Komplexe dreidimensionale Geometrien, beispielsweise zur Ausbildung von Oberflächenmodifikationen oder Hinterschnitten sind beim Transfer Molding schwieriger umzusetzen.

Hierzu eignet sich insbesondere das Duroplast-Spritzgießen. Beim Duroplast-Spritzgießen wird mit einer Spritzgießmaschine das Duroplast-Material bei vergleichsweise geringer Temperatur und unter Druck in ein Formwerkzeug eingespritzt, in welchem sich der Sensorchip befindet. Im Formwerkzeug geht das Duroplast-Material durch eine Vernetzungsreaktion (z.B. durch weiteres Erhitzen) in den gehärteten Zustand eines Duroplasten über, sodass nach dem Öffnen des Formwerkzeuges das Duroplast-Package mit mindestens teilweise eingebettetem Sensorchip als Fertigteil entnommen werden kann.

Die Kavität im Formwerkzeug bestimmt dabei die Form und die Oberflächenstruktur des fertigen Duroplast-Package, wobei sich das Verfahren in Bezug auf die Formgebung durch einen hohen Grad an Flexibilität auszeichnet.

Der Sensorchip wird bevorzugt mittels der oben genannten Verfahren mindestens teilweise mit einem Duroplast-Material zur Bildung eines Duroplast-Package verkapselt bzw. ummantelt.

Ein mindestens teilweises Verkapseln kann bevorzugt ein Verkapseln von mehr als 30 %, 40%, 50%, 60%, 70%, 80%, 90% der gesamten Oberfläche des Sensorchips oder ein vollständiges Verkapseln meinen.

Besonders bevorzugt wird mindestens eine Ober- oder Unterfläche des Sensorchips mindestens teilweise, bevorzugt vollständig, mit dem Duroplast-Material zur Ausbildung eines Duroplast-Package verkapselt. Das gebildete Duroplast-Package umfasst bevorzugt mindestens eine Koppelzone, welche bevorzugt einen Bereich des Duroplast-Package kennzeichnet, über welchen eine mechanische Kopplung zwischen Sensorchip und Bauteil vermittelt wird.

In einer bevorzugten Ausführungsform erfolgt die mechanische Kopplung des im Duroplast-Package eingebetteten Sensorchips an das zu überwachende Bauteil über eine durch das Duroplast-Package gebildete Koppelzone, wobei die Koppelzone eine Dicke zwischen 50 µm und 1000 µm, bevorzugt 100 µm und 500 µm aufweist. Auch Zwischenbereiche aus den vorgenannten Bereichen können bevorzugt sein, wie beispielsweise 50 µm bis 100 µm, 100 µm bis 200 µm, 200 µm bis 300 µm, 300 µm bis 400 µm, 400 µm bis 500 µm, 600 µm bis 700 nm, 700 µm bis 800 µm, 800 µm bis 900 µm oder auch 900 µm bis 1000 µm. Ein Fachmann erkennt, dass die vorgenannten Bereichsgrenzen auch kombiniert werden können, um weitere bevorzugte Bereiche zu erhalten, wie beispielsweise 100 µm bis 300 µm, 50 µm bis 500 µm oder auch 600 µm bis 900 µm.

Die Dicke der Koppelzone meint bevorzugt eine Dimensionierung der Koppelzone orthogonal zu den jeweiligen Flächen des Sensorchips bzw. des Bauteils welche über die Koppelzone mechanisch gekoppelt werden. Die vorgenannten Dimensionen gewährleisten eine optimierte Kraftübertragung von dem Bauteil auf den Sensorchip, bei dem ein hohen Anteil der im Bauteil vorherrschenden mechanischen Spannungen an den Sensorchip durchgeleitet werden.

In einer bevorzugten Ausführungsform weist das Duroplast-Package bei Raumtemperatur ein Elastizitätsmodul zwischen 10000 und 30000 N/mm² und/oder eine Kriechbeständigkeit als Verhältnis des Kriechmoduls nach 1000 h und nach 1 h von mindestens 0,6, bevorzugt mindestens 0,7, 0,8, 0,9, 0,95 oder mehr auf.

Die Elastizität (oder auch Steifigkeit) bezeichnet bevorzugt eine Materialeigenschaft eines Werkstoffes, unter Krafteinwirkung seine Form zu verändern und bei Wegfall der einwirkenden Kraft in die Ursprungsform zurückzukehren. Quantitativ lässt sich die Elastizität bevorzugt durch das Elastizitätsmodul, auch, E-Modul, Zugmodul, Elastizitätskoeffizient, Dehnungsmodul, oder Youngscher Modul benannt, kennzeichnen. Das Elastizitätsmodul bezeichnet bevorzugt bei linear-elastischem Verhalten den proportionalen Zusammenhang zwischen Spannung und Dehnung bei der Verformung von festen Körpern. Die vorgenannten Parameter für das Elastizitätsmodul des Duroplast-Package führen zu einer besonders verlustfreien Übertragung von mechanischen Beanspruchungen des Bauteils auf den Sensorchip, sodass sensitive Messungen gewährleistet werden.

Neben den elastischen Eigenschaften sind Duroplaste zudem aufgrund ihres Kriechverhaltens im besonderen Maße zur mechanischen Kopplung des Sensorchips an ein Bauteil geeignet.

Das Kriechen (Retardation) bezeichnet bei Werkstoffen bevorzugt die zeit- und temperaturabhängige viskoelastische oder plastische Verformung unter konstanter Last.

Bei Duroplasten tritt das Kriechen insbesondere aufgrund des viskoelastischen Verhaltens der Polymere auf. Bei konstanter Dehnung eines Duroplast oder Kunststoffes ist deshalb ein Spannungsabfall (Relaxation) zu verzeichnen.

Im Stand der Technik ist es bekannt das Kriechverhalten von Kunststoffen in Zeitstandsversuchen zu ermitteln und in Form von sogenannten Kriechkurven ε = f(t;σ) darzustellen, wobei ε die zeitabhängige Dehnung, t die Belastungszeit und σ die mechanische Spannung ist. Das Kriechmodul E_{c}(t) = σ / ε (t) ist definiert als Verhältnis der Spannung σ zur zeitabhängigen Dehnung ε(t). Das Kriechmodul ist mithin eine zeitabhängige Zustandsgröße. Die Einheit ist N/mm² (Newton pro Quadratmillimeter).

Die Kriechbeständigkeit kann als eine dimensionslose Kenngröße für das Kriechverhalten als Quotient des zeitabhängigen Kriechverhaltens zu unterschiedlichen Zeitpunkten, bevorzugt nach 1 h und 1000 h definiert werden (vgl. Kunz 2004). Je größer die Kriechbeständigkeit ist, desto kleiner die Neigung des Duroplast-Package zu kriechen. Eine Kriechbeständigkeit von 1 beschreibt ein Duroplast-Package mit zeitlich konstanter Steifigkeit, bei dem kein Kriechen auftritt.

Die genannten bevorzugten Parameter für die Kriechbeständigkeit des Duroplast-Package führen zu einer besonderes langzeitstabilen Übertragungsfunktion mechanischer Beanspruchungen vom Bauteil auf den Sensorchip. Eine erneute Kalibration ist nicht notwendig, sodass auch Langzeitüberwachungen von Bauteilen mittels des im Duroplast-Package mindestens teilweise eingebetteten Sensorchips zuverlässig durchführbar sind.

Im Sinne der Erfindung meint ein Sensorchip bevorzugt ein Halbleiterbauteil umfassend mindestens ein Bulk-Substrat mit einem oder mehreren Sensorelementen sowie vorzugsweise einer elektronischen Schaltung.

In einer bevorzugten Ausführungsform sind die einen oder mehreren Sensorelemente konfiguriert für eine resistive, bevorzugt eine piezoresistive, eine optische, eine magnetische, eine induktive und/oder eine kapazitive Messung von Verformungen oder Spannungen des Bulk-Substrates.

Resistive und piezoresistive Sensorelemente basieren in der Regel auf einer Änderung des elektrischen Widerstands aufgrund einer Längenänderung des Substrates auf dem sie angebracht vorliegen. Die piezoresistive Änderung des Widerstands aufgrund einer Dehnung der Sensorelemente ist dabei insbesondere bei (dotierten) Halbleitern deutlich stärker ausgeprägt (höherer k-Faktor) und erlaubt bevorzugt empfindlichere und genauere Dehnungsmessungen. Eine Widerstandänderung kann bevorzugt durch Änderung an der am Sensorelement anliegenden Spannung in einer Wheatstone'schen Brücke gemessen werden.

Piezoelektrische Sensorelemente beruhen bevorzugt auf einer materialinhärenten Generierung einer elektrischen Spannung durch auf die Anordnung wirkende Druck- und/oder Zugkräfte.

Eine induktive Messanordnung beruht bevorzugt auf der Stärke des durch ein veränderliches Magnetfeld hervorgerufenen Stroms.

Ein optisches Sensorelement kann vorzugsweise Dehnungen zwischen verschiedenen Bereichen über eine Entfernungsmessung messen. Hierzu eignet sich beispielsweise eine interferometrische Messung, bei der eine Überlagerung zueinander kohärenter optischer Signale Informationen über deren Phasenunterschied enthält, welche ausgelesen werden kann. Dieser Phasenunterschied enthält dabei wiederum bevorzugt Informationen über die Entfernung zwischen den Bereichen.

Ein magnetisches Sensorelement kann beispielsweise auf einem Hall-Sensor beruhen, welcher je nach Position innerhalb eines Magnetfelds und damit je nach erfahrener magnetischer Flussdichte eine unterschiedliche Spannung generiert. Somit kann bevorzugt bei einem feststehenden Referenzmagnetfeld die gemessene Spannung zur relativen Lagebestimmung des Halls-Sensors zu diesem Magnetfeld genutzt werden. Durch dieses Messprinzip kann insbesondere eine Abstandsmessung (und somit Spannungs- bzw. Dehnungsmessung) zwischen verschiedenen Bereichen auf dem Bulk-Substrat realisiert werden,

Ein kapazitives Sensorelement beruht bevorzugt auf dem Prinzip einer messbaren Änderung der Kapazität eines Kondensators bei einer Variation des Abstands zwischen den Kondensatorplatten (Elektroden). Hierzu sind eine Vielzahl verschiedener Implementierungen denkbar, beispielsweise in Form jeweils von Kondensatorplatte auf dem Bulk-Substrat, als auch durch (MEMS-) Kammstrukturen, bei denen je nach Ausführungsform die Kammüberdeckung und/oder der Kammabstand variiert werden kann.

Ein Fachmann kennt verschiedene Sensorelemente sowie Materialien, welche bevorzugt verwendet werden können, um resistive, bevorzugt piezoresistive, optische, magnetische, induktive und/oder kapazitive Messungen von Verformungen, Spannungen, Kräften und/oder Drehmomenten zu ermöglichen.

Bevorzugt kommen hierbei MEMS-Sensoren zum Einsatz, d.h. Komponenten, welche auf der MEMS-Technologie beruhen. MEMS steht für den englischen Ausdruck *microelectromechanical system,* also ein Mikrosystem, welches eine kompakte (Mikrometerbereich) Bauweise bei gleichzeitig hervorragender Funktionalität mit immer geringeren Herstellungskosten ermöglicht. Insbesondere wird der gesamte Sensorchip umfassend die Sensorelemente sowie bevorzugt die elektronische Schaltung bevorzugt vollintegriert in CMOS-Technologie aufgeführt. CMOS steht für die englische Bezeichnung *complementary metal oxide semiconductor.*

Bevorzugt liegen die Sensorelemente auf einem Bulk-Substrat gemeinsam mit einer elektronischen Schaltung zur Auswertung und/oder Steuerung der Sensorelemente angeordnet vor und stehen mit dieser über elektrische Verbindungen, welche beispielsweise durch Drahtbonds erfolgen und/oder im Substrat, z. B. durch Leiterbahnen angelegt sind, in Kontakt. Das Bulk-Substrat fungiert insbesondere als mechanischer Träger kann zudem aber auch elektrische Funktionen realisieren, z. B. elektrische Verbindungen für die einzelnen Komponenten bereitstellen.

Bevorzugte elektronische Schaltungen umfassen ohne Beschränkung eine integrierte Schaltung (IC), eine anwendungsspezifische integrierte Schaltung (ASIC), eine programmierbare logische Schaltung (PLD), ein Field Programmable Gate Array (FPGA), einen Mikroprozessor, einen Mikrocomputer, eine speicherprogrammierbare Steuerung und/oder eine sonstige elektronische, bevorzugt programmierbare, Schaltung.

Mittels einer elektronischen Schaltung und/oder weiterer elektronischen Komponenten auf dem Sensorchip kann bevorzugt bereits ein Auslesen und/oder eine (Vor-)Verarbeitung der Messdaten der Sensorelemente erfolgen. Zu diesem Zweck kann auf dem Sensorchip oder einem Schaltungsträger beispielsweise ein Multiplexer (MUX, zum Auslesen der Signale mehrere Sensorelemente), ein Operationsverstärker (z.B. *differential difference amplifier* (DDA) mit variablem Gain) oder Analog-zu-digital-Wandler (*analog-to-digital converter,* ADC) zur Wandlung der Signale in digitale Daten vorliegen.

In einer besonders bevorzugten Ausführungsform umfassen die einen oder mehreren Sensorelemente piezoresistive Strukturen, bevorzugt piezoresistive Sensorbrücken.

Bevorzugt können die piezoresistiven Sensorbrücken als Wheatstone-Brücken vorzugsweise als Vollbrücke ausgestaltet vorliegen. Vorteilhaft können hierbei vier piezoresistive Strukturen, welche die Vollbrücke bilden, sehr nahe zueinander positioniert werden. Störquellen wie eine Temperaturdrift werden kompensiert, da sich die Temperaturdrift bevorzugt gleichermaßen auf alle piezoresistive Strukturen auswirkt.

Besonders bevorzugt umfasst der Sensorchip mehr als 5, 10, 15, 20, 30 oder mehr Sensorelemente, wobei die Sensorelemente an unterschiedliche Positionen auf dem Substrat verteilt vorliegen.

Durch die Vielzahl von Sensorelemente kann eine besonders präzise Messung einer zweidimensionalen Verteilung von Verformungen und/oder Spannungen auf dem Bulk-Substrates erfolgen. Anders beispielsweise als es bei Halbleiter-DMS Sensoren der Fall wäre, integriert der Sensorchip mithin die örtliche Beanspruchung am Bulk-Substrat nicht über seine komplette Fläche, sondern erlaubt mittels der Vielzahl von Sensorelementen auf dem Bulk-Substrat eine ortsaufgelöste Messung des Stresses bzw. der Dehnung im betreffenden Bereich unter der Grundfläche.

In einer bevorzugten Ausführungsformen wird mittels einer oder mehrerer der Sensorelemente eine Spannungsdifferenz σₓₓ₋σ_{yy} auf dem Substrat gemessen. Die Spannungen σₓₓ und σ_{yy} entsprechen orthogonalen Normalspannungen in der xy-Ebene.

In einer bevorzugten Ausführungsformen wird mittels einer oder mehrerer Sensorelemente eine Schubspannung σ_{xy} gemessen, sodass auch Scherkräfte, welche auf das Substrat wirken, erfasst werden können.

In einer bevorzugten Ausführungsform sind die Sensorelemente als piezoresistive Sensorbrücken ausgestaltet, welche im Quadrat als Wheatstone'sche Brücken angeordnet sind, wobei eine Scherspannung von n-Kanal-basierten Transistoren bestimmt wird und wobei die Sensorbrücke um 45° zu einem (x,y)-Koordinatensystem gedreht vorliegt, während p-Kanal-basierten Transistoren als Sensorbrücke parallel zum Koordinatensystem angeordnet vorliegen und die Normalspannungsdifferenz messen.

Besonders bevorzugt liegen die piezoresistiven Sensorbrücken als quadratische Feldeffekttransistoren (FET, bevorzugt MOSFET) mit vier Source/Drain-Kontakten (Piezo-FETs) ausgestaltet vor, die den piezoresistiven Schereffekt in n-Typ (NMOS) oder p-Typ (PMOS)-Inversionsschichten ausnutzen. Zur Messung der Scherspannung σ_{xy} werden bevorzugt NMOS-Sensorelemente und zur Messung der Normalspannungsdifferenz (σₓₓ - σ_{yy}) PMOS-Sensorelemente verwandt. Beispiele bevorzugter Sensorchips mit piezoresistiven Sensorbrücken als Sensorelemente werden u.a. in Gieschke et al. 2009 und Kuhl et al. 2013 offenbart.

Besonders bevorzugt können auf dem Sensor mehrere Sensorelemente vorliegen, welche eine Spannungsdifferenz der Normalspannungen σₓₓ-σ_{yy} bestimmen, als auch mehrere Sensorelemente, welche eine Schubspannung σ_{xy} bestimmen. Hierdurch wird ein besonders präzises Abbild einer zweidimensionalen Spannungsverteilung im Bulk-Substrat und somit mittelbar des zu überwachenden Bauteils ermittelt.

In einer bevorzugten Ausführungsform umfasst das Bulk-Substrat des Sensorchips ein Halbleitermaterial, bevorzugt Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid. Diese Materialien sind in der Halbleiter- und/oder Mikrosystemherstellung einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, mechanischen thermischen und/oder optischen Eigenschaften zu erzielen. Das Bulk-Substrat kann im Sinne der Erfindung auch als Substrat bezeichnet werden.

Die Sensorelemente zur Messung einer auf den Sensorchip einwirkenden mechanischen Verformung und/oder Spannung werden auf oder in das Bulk-Substrat eingebracht. Hierbei können aus der Halbleiterindustrie bekannte Materialien und/oder Fertigungstechniken zum Einsatz kommen, welche sich durch ihre Effizienz, Einfachheit, geringen Produktionskosten und Eignung zur Fertigung hoher Stückzahlen auszeichnen.

Beispielsweise kann mittels einer Maskierung (bevorzugt Fotolithografie) auf dem Bulk-Substrat Bereiche zur Ausbildung der Sensorelemente und/oder einer elektronischen Schaltung definiert werden, an denen weitere Halbleiterprozesse wie Ätzen, Dotierung und/oder Abscheidung vorgenommen werden können. Bei dem Bulk-Substrat kann es sich auch um ein mehrlagiges Substrat umfassend zwei oder mehr Lagen handeln, welche einzeln bearbeitet und zusammengefügt werden (Bonding).

Ein Ätzen und/oder eine Strukturierung kann bevorzugt ausgesucht werden aus der Gruppe umfassend Trockenätzen, nasschemisches Ätzen und/oder Plasmaätzen, insbesondere Reaktives lonenätzen, Reaktives lonentiefenätzen (Bosch-Prozess).

Eine Abscheidung oder Aufbringen kann bevorzugt ausgesucht werden aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD).

Eine Dotierung kann beispielsweise durch bekannte Verfahren wie Legierung, Diffusion und/oder Ionenimplantation erfolgen.

In einer bevorzugten Ausführungsform weist das Substrat des Sensorchips eine Dicke zwischen 20 µm und 600 µm, bevorzugt 100 µm und 500 µm, 200 µm und 400 µm auf. Die Dimensionierung des Substrates ist besonders geeignet, um eine gute, mechanische Übertragungsfunktion vom Bauteil auf den Sensorchip bzw. die Sensorelemente zu gewährleisten.

Mechanische Beanspruchungen meinen im Sinne der Erfindung bevorzugt Verformungen, Spannungen, Kräfte und/oder Drehmomente, welche auf die betreffenden Komponenten, wie z.B. das Bauteil, das Duroplast-Package, den Sensorchip oder Bulk-Substrat wirken.

Zu den Beanspruchungen können beispielsweise laterale Kräfte (Fₓ, F_{y}) in einer Ebene zählen. Eine (mechanische) Spannung gibt das Verhältnis von Kräften pro gedachter Schnittfläche an. Eine mechanische Normalspannung σ auf einer gedachten Schnittfläche A durch einen Körper ist die auf sie bezogene senkrecht auf sie wirkende Komponente Fₙ einer äußeren Kraft F pro Fläche A. Die Normalspannung σₓₓ gibt daher bevorzugt die in einem gedachten x,y Koordinatensystem wirkenden Kraft entlang der x-Achse (Fₓ) zu einer dazu senkrecht stehenden Schnittfläche A des Sensorchips bzw. Bulk-Substrates (yz-Ebene) an.

Durch die auf das Bauteil wirkenden Spannungen oder Kräfte können Verformungen (insbesondere Dehnungen oder Stauchungen) im Bulk-Substrat auftreten, welche von der Richtung und Amplitude der wirkenden Kräfte oder Spannungen abhängen bzw. Rückschlüsse auf diese zulassen.

Eine Dehnung (oftmals mit dem Formelzeichen ε bezeichnet) gibt eine relative Längenänderung eines Körpers an, welche eine Verlängerung oder Verkürzung sein kann. Man bezeichnet eine Vergrößerung des Objekts als positive Dehnung bzw. Streckung, andernfalls wird von einer negativen Dehnung bzw. Stauchung gesprochen. Eine Dehnung ist bevorzugt definiert als *ε* = *Δl*/*l₀,* wobei *Δl* die Längenänderung darstellt und *l₀* die Ausgangslänge.

Mittels des Sensorchip werden insbesondere lokale Verformungen, wie z.B. Dehnungen oder Stauchungen oder im Bauteil wirkenden Spannungen in einer Ebene ermittelt. Die Ebene (xy-Ebene) entspricht bevorzugt jener Ebene des Sensorchips, aufweichen die Sensorelemente angeordnet und beispielsweise bevorzugt eine Scher- oder Normalspannungsdifferenz messen.

Beanspruchungen können ebenso axiale Kräfte (F_{z}) oder Drehmomente (M_{z}) betreffen, wobei die axiale Richtung (z-Achse) senkrecht auf der xy-Ebene des Sensorchips steht, auf welcher bevorzugt die Sensorelemente aufgebracht vorliegen.

Im Falle einer axialen Zug- oder Druckkraft auf das Bauteil im Bereich des Sensorchips kommt es gleichfalls zu charakteristischen Verformungen oder Spannungen des Sensorchips bzw. des Bulk-Substrates, welche als charakteristischem Dehnungs- bzw. Stauchungsmuster erfasst werden können.

Ebenso führen vorteilhaft im Bauteil wirkende Drehmomente (M_{z}) zu spezifischen Verformungen oder Spannungen des Sensorchips bzw. Bulk-Substrates, beispielsweise in Form eines Torsionsmusters. Durch entsprechende Integration der Vorrichtung in ein Bauteil, beispielsweise eine Werkzeugspindel, können somit Drehmomente bzw. Torsionsmuster innerhalb des Bauteils bzw. der Spindel ausgemessen werden.

Mittels der Sensorelemente werden bevorzugt Verformungen oder Spannungen des Sensorchips selbst bzw. des Bulk-Substrates ermittelt. Die Messdaten bieten aufgrund der mechanischen Kopplung unmittelbar Rückschlüsse auf das Bauteil wirkenden Spannungen, Kräfte, Verformungen oder Drehmomente.

Mittels verschiedener Kalibration können hierbei neben relativen Aussagen über die Änderungen der mechanischen Beanspruchungen im Bauteil auch absolute Aussagen über die im Bauteil wirkenden Spannungen, Kräfte, Verformungen oder Drehmomente gewonnen werden. In die Kalibration können beispielsweise mechanischen Eigenschaften des Sensorchips bzw. des Bulk-Substrates sowie des Duroplast-Package einfließen.

Unterschiedliche Formen können für den Sensorchip bevorzugt sein, beispielsweise eine Kreisform, Rechteckform oder andere polygonale Form, besonders bevorzugt ist die Form eines Rechteckes oder eines Quadrates.

In einer bevorzugten Ausführungsform weist der Sensorchip eine Breite und/oder Länge zwischen 0,5 mm und 10 mm, vorzugsweise 1 mm und 5 mm, bevorzugt 1 mm bis 3 mm auf. Die Dicke des Sensorchips ist bevorzugt weniger als 1 mm, bevorzugt weniger als 700 µm, oder weniger als 500 µm.

Der Sensorchip ist mithin in der bevorzugten Ausführungsform im Wesentlichen flach, d.h. der Sensorchip ist durch eine größere Breite und/oder Länge in einer Ebene (xy-Ebene) im Vergleich zu einer dazu orthogonalen Dimension (z-Achse, Dicke) gekennzeichnet. Der Faktor kann beispielsweise 2, 3, 5 oder mehr betragen.

In einer bevorzugten Ausführungsform weist der Sensorchip eine Fläche von 0,25 mm² bis 100 mm², vorzugsweise 1 mm² bis 25 mm², besonders bevorzugt von 1 mm² bis 9 mm² auf.

In einer bevorzugten Ausführungsform liegt der Sensorchip mit einem Schaltungsträger kontaktiert vor. Ein Schaltungsträger ist bevorzugt ein Bauelement umfassend ein elektrisch isolierendes Material, auf dem elektrisch leitende Verbindungen (Leiterbahnen) und/oder elektronische Bauelemente bzw. Baugruppen vorliegen.

In bevorzugten Ausführungsformen ist der Schaltungsträger eine Leiterplatte (Platine, engl. *printed circuit board*), wobei sowohl konventionelle (steife) Leiterplatten, als auch flexible Leiterplatten (engl. *flexible printed circuits*) zum Einsatz kommen können.

In einer bevorzugten Ausführungsform liegt der Sensorchip mit einem Schaltungsträger mittels eines Chip-On-Board-Verfahrens kontaktiert vor, wobei eine elektrische Kontaktierung bevorzugt mittels einer Flip-Chip-Montage oder Chip-and-Wire-Technik, vorzugsweise mittels Drahtbonden, erfolgt.

Bei einer Flip-Chip-Montage wird der Sensorchip vorzugsweise mit einer aktiven Kontaktierungsseite, auf der sich die Sensorik (Sensorelemente) und/oder Elektronik befindet, zum Schaltungsträger (z.B. Leiterplatte) aufgebracht. Die Kontaktierung erfolgt bevorzugt mittels Kontaktierhügel (engl. *bumps*), beispielsweise mittels einer anisotrop leitfähigen Folie.

Bei der Chip-and-Wire-Technik wird der Sensorchip bevorzugt direkt auf den Schaltungsträger (z.B. eine Leiterplatte) geklebt und mittels Drahtbonden (Brücken aus feinem Draht) mit dem Schaltungsträger elektrisch verbunden.

Eine Kontaktierung des Sensorchips mit einer externen Datenverarbeitungseinheit kann bevorzugt über eine Schnittstelle auf dem Schaltungsträger, drahtbehaftet oder drahtlos erfolgen.

In bevorzugten Ausführungsformen liegt der Schaltungsträger im Duroplast-Package nicht oder nur teilweise im Duroplast-Package eingebettet vor, sodass der Schaltungsträger einer weiteren elektronischen Kontaktierung zugänglich ist. Die Ausführungsform ist insbesondere für eine drahtbehaftete Kontaktierung des Sensorchips mit einer externen Datenverarbeitungseinheit (zum Auslesen der Messdaten) bevorzugt.

In bevorzugten Ausführungsformen liegt der Schaltungsträger im Duroplast-Package vollständig eingebettet vor. In der Ausführungsform werden die Daten des Sensorchips bevorzugt drahtlos ausgelesen.

In einer bevorzugten Ausführungsform umfasst der Sensorchip eine oder mehrerer induktive Spulen als telemetrische Schnittstellen für eine bevorzugt bidirektionale Übertragung von Messwerten und/oder zur Versorgung mit Energie.

Eine derartige telemetrische Schnittstelle erlaubt einen besonders flexiblen Einsatz eines energieautarken Sensorchips.

Über die induktive Schnittstelle kann die zum Betrieb benötigte elektrische Leistung durch ein externes Lesegerät eingekoppelt werden. Daraufhin können die integrierten Sensorelemente die Spannungs- oder Deformationsverteilung messen und Messdaten wiederum drahtlos an das Lesegerät übertragen.

Vorteilhaft kann die Vorrichtung beispielsweise auch zur Überwachung rotierender Objekte, beispielsweise von Werkzeugspindeln, eingesetzt werden, welche mittels kabelbehafteter Kontaktierung andernfalls nicht ohne Weiteres möglich ist.

Die induktive Schnittstelle bzw. (Transponder)Spulen können auf dem Sensorchip selbst, oder aber separat beispielsweise auf dem Schaltungsträger installiert vorliegen.

In einem weiteren Aspekt betrifft die Erfindung ein Duroplast-Package zur mechanischen Kopplung eines Sensorchips an ein Bauteil zur Überwachung mechanischer Verformungen und/oder Spannungen, dadurch gekennzeichnet, dass der Sensorchip ein oder mehrere Sensorelemente zur Messung mechanischer Verformungen und/oder Spannungen auf einem Bulk-Substrat umfasst und in dem Duroplast-Package mindestens teilweise eingebettet vorliegt, wobei das Duroplast-Package mindestens eine Koppelzone für die mechanische Kopplung des im Duroplast-Package eingebetteten Sensorchips an das zu überwachende Bauteil aufweist.

In einem weiteren Aspekt betrifft die Erfindung ein System umfassend
a. ein beschriebenes Duroplast-Package mit mindestens teilweise eingebettetem Sensorchip und
b. ein Bauteil
wobei das Duroplast-Package mit dem Bauteil mechanisch gekoppelt vorliegt, sodass mittels des Sensorchips eine Überwachung mechanischer Verformungen und/oder Spannungen des Bauteiles durchgeführt werden kann.

Der durchschnittliche Fachmann erkennt, dass technische Merkmale, Definitionen und Vorteile bevorzugter Ausführungsformen, welche für das erfindungsgemäße Verfahren zur Kopplung eines Sensorchips an ein Bauteil zur Überwachung mechanischer Verformungen und Spannungen, wobei der Sensorchips mindestens teilweise in einem Duroplast-Package eingebettet vorliegt, offenbarte wurden, gleichermaßen für ein Duroplast-Package mit mindestens teilweise eingebettetem Sensorchip zur Überwachung eines Bauteils sowie einem System umfassend ein Duroplast-Package mit mindestens teilweise eingebettetem Sensorchip und einem Bauteil gelten, und umgekehrt.

Bei dem Bauteil kann es sich bevorzugt um ein Strukturbauteil, vorzugsweise ein tragendes Strukturbauteil beispielsweise von Brücken, Gebäude, Flugzeuge, Automobile, Schiffen etc. Windkraftanlagen handeln. Hierbei erlauben eine oder mehrerer der mindestens teilweise in einem Duroplast-Package eingebetteten Sensorchips vorteilhaft ein *Structural Health Monitoring* (SHM) der statisch gelagerten Strukturen. Auf Basis der Messdaten eines oder mehrerer Sensorchips können zuverlässig selbst geringste Schädigungsprozesse durch mechanische Belastung detektiert werden.

Ebenso kann das Bauteil beispielsweise eine Komponente oder eine Baugruppe einer Maschine darstellen, sodass auf Basis einer kontinuierlichen Messung der Verformungen und Spannungen in dem Bauteil der Zustand der Maschine überwacht werden kann. Schnell reagierende Sicherheitssysteme können implementiert werden, welche bei fehlerhafter Ausführung durch rechtzeitig Notabschaltung strukturelle Schäden an der Maschine verhindern. Ebenso kann die Überwachung zur Verbesserung bzw. Gewährleistung der Maschineneffizienz genutzt werden, wobei basierend auf einer Überwachung eine verminderte Effizient bestimmter Bauteile oder Baugruppen frühzeitig festgestellt werden kann.

Zur Auswertung oder Analyse der Messdaten des mindestens einen Sensorchips kann es bevorzugt sein, dass das System eine (externe) Datenverarbeitungseinheit aufweist.

Bevorzugt ist die (externe) Datenverarbeitungseinheit dafür konfiguriert, aus den vom Sensorchip ermittelten Messdaten über Verformungen und/oder Spannungen des Bulk-Substrates auf Verformungen, Spannungen Kräfte und/oder Drehmomente zu schließen, welche an den betreffenden Stellen im Bauteil vorliegen oder wirken.

Die Datenverarbeitungseinheit erlaubt somit bevorzugt eine Auswertung der Messdaten des Sensorchips, um die tatsächlichen Beanspruchungen am bzw. in einem Bauteil zu ermitteln.

Eine elektronische Schaltung auf dem Sensorchip selbst kann ebenfalls bereits eine (Vor)auswertung der Messdaten leisten. Es kann aber auch bevorzugt sein, dass eine elektronische Schaltung im Wesentlichen die Messdaten unverarbeitet an die (externe) Datenverarbeitungseinheit zur weiteren Verarbeitung und/oder Auswertung weiterleitet.

Die (externe) Datenverarbeitungseinheit ist bevorzugt eine Einheit, welche zum Empfang, Senden, Speichern und/oder Verarbeiten von Daten, bevorzugt von Messdaten, geeignet und konfiguriert ist. Die Datenverarbeitungseinheit umfasst bevorzugt einen integrierten Schaltkreis, einen Prozessor, einen Prozessorchip, Mikroprozessor oder Mikrokontroller zur Verarbeitung von Daten, sowie einen Datenspeicher, beispielsweise eine Festplatte, einen *random access memory* (RAM), einen *read-only memory* (ROM) oder auch einen *flash memory* zur Speicherung der Daten.

Zur Ermittlung der auf das Bauteil wirkenden Kräfte und/oder Drehmomente anhand der vom Sensorchip ermittelten Messdaten über Verformungen und/oder Spannungen des Bulk-Substrates kann auf dem Datenspeicher bevorzugt ein Computerprogramm gespeichert vorliegen, welches Befehle umfasst, entsprechende Berechnungsschritte durchzuführen. Bevorzugt kann auf der Datenverarbeitungseinheit zu diesem Zweck zudem Referenzdaten gespeichert vorliegen, welche durch geeignete Kalibration erhalten wurden.

Besonders bevorzugt ist als Datenverarbeitungseinrichtung ein Personal Computer(PC), ein Laptop, ein Tablet oder dergleichen, welche neben Mitteln zum Empfang, Senden, Speichern und/oder Verarbeiten von Daten auch ein Anzeigen der Daten sowie eine Eingabemittel umfassten, wie beispielsweise ein Keyboard, ein Maus, ein Touchscreen etc. Zudem kann die Datenverarbeitungseinheit bevorzugt auch genutzt werden, um die Vorrichtung zu steuern, d.h. beispielsweise Parameter zur Durchführung der Messungen vorzugeben.

### Detaillierte Beschreibung

Im Folgenden soll die Erfindung anhand von Beispielen näher erläutert werden, ohne auf diese beschränkt zu sein.

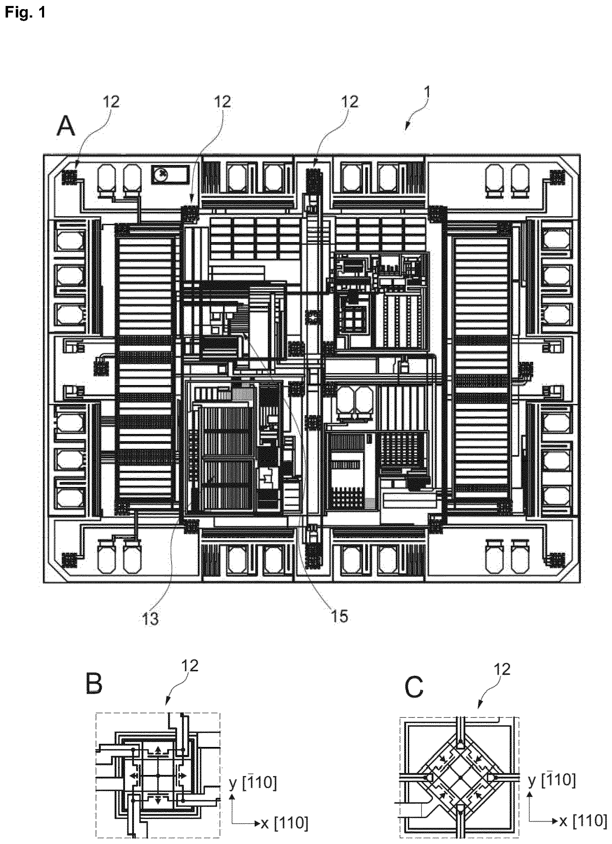

Fig. 1 illustriert eine bevorzugten Ausführungsform eines Sensorchips 1. Gezeigt wird die Sensorik bzw. Elektronik, welche sich auf dem Bulk-Substrat befindet.

Der Sensorchip **1** umfasst insgesamt 32 Sensorelemente **12,** welche an verschiedenen Positionen auf dem Bulk-Substrat positioniert sind, um eine zweidimensionale Auflösung der Spannungsverteilung zu gewährleisten. Der Sensorchip **1** selbst weist eine Länge und Breite von ca. 2 mm x 2,5 mm auf und besitzt eine Dicke von ca. 300 µm

Der Sensorchip ist vollintegriert in CMOS-Technologie ausgeführt. Bei den Sensorelementen handelt es sich um piezoresistive Sensorbrücken, welche als bevorzugt Wheatstone-Brückenausgestaltet vorliegen (vgl. Fig. 1B und C).

In Fig. 1B ist ein Sensorelement **12** illustriert, welches als piezoresistive Sensorbrücke vom Typ PMOS ist und parallel zum Koordinatensystem (x,y) ausgerichtet vorliegt und insbesondere für die Differenz der Normalspannungen σₓₓ - σ_{yy} sensitiv ist.

Fig. 1 C zeigt ein Sensorelement **12**, welches als piezoresistive Sensorbrücke vom Typ NMOS ist und um 45° gedreht zum Koordinatensystem (x,y) ausgerichtet vorliegt und insbesondere für die Scherspannung σ_{xy} sensitiv ist.

Neben den Sensorelementen **12** weist der Sensorchip zusätzliche elektronische Komponenten auf. Insbesondere umfasst der Sensorchip **1** einen *control logic* als elektronische Schaltung **15**, einen analog-to-digital converter (ADC) und einen Operationsverstärker (*differential difference amplifier* (DDA)). In der bevorzugten Ausführungsform liegt zudem eine induktive Schnittstelle (*telemetric interface*) zum drahtlosen Auslesen von Messdaten oder zur Energieversorgung vor.

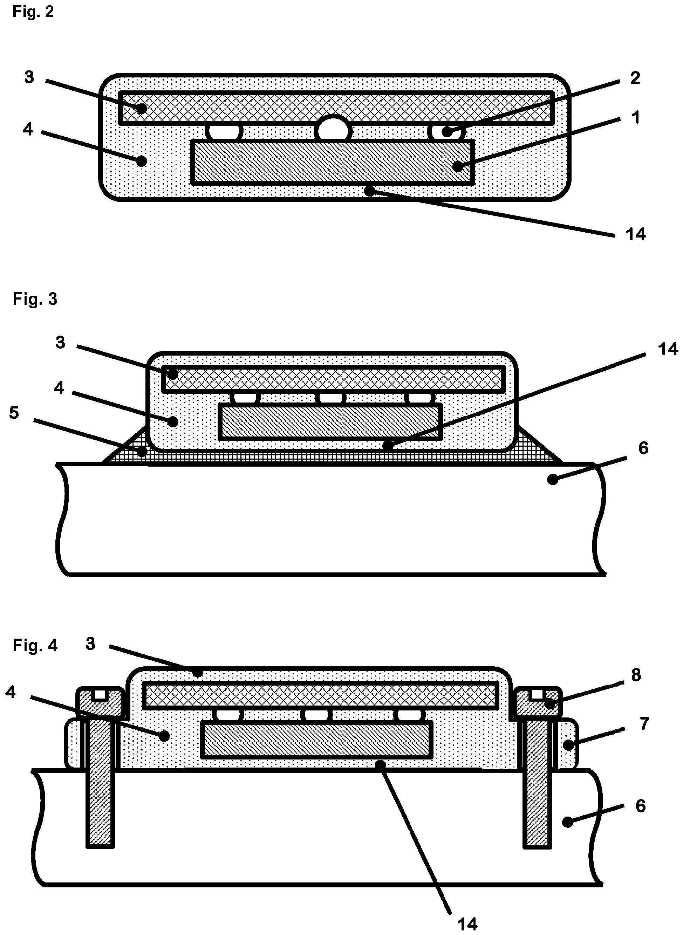

Fig. 2 illustriert eine bevorzugten Ausführungsform eines Duroplast-Package **4** mit mindestens teilweise eingebettetem Sensorchips **1.** In der gezeigten Ausführungsform ist der Sensorchip **1** vollständig vom Duroplast-Package **4** eingebettet.

Der Sensorchip **1** liegt mit einer Leiterplatte als Schaltungsträger **3** mittels eines Chip-On-Board-Verfahrens kontaktiert vor, wobei eine elektrische Kontaktierung **2** mittels einer Flip-Chip-Montage erfolgt. Zu diesem Zweck liegt der Sensorchip **3** vorzugsweise mit einer aktiven Kontaktierungsseite auf der sich die Sensorik (Sensorelemente) und/oder Elektronik befindet zum Schaltungsträger (z.B. Leiterplatte) aufgebracht vor. Die Kontaktierung erfolgt bevorzugt mittels Kontaktierhügel **2** (engl. *bumps*), beispielsweise mittels einer anisotrop leitfähigen Folie.

Durch die Bildung eines Duroplast-Package **4** mit mindestens teilweise eingebettetem Sensorchip 1 wird eine besonders langzeitstabile, driftarme und kraftsensitive Ankopplungsmöglichkeit des Sensorchips **1** über eine Koppelzone **14** an ein zu überwachendes Bauteil (nicht gezeigt) ermöglicht.

Fig. 3 -8 illustrieren verschiedenen mechanische Kopplungsmöglichkeiten eines Duroplast-Package **4** mit mindestens teilweise eingebettetem Sensorchip **1** an ein Bauteil **6.**

In Fig. 3 wird das Duroplast-Package **4** mit mindestens teilweise eingebettetem Sensorchip **1** über eine Klebeschicht **5** mit dem zu überwachenden Bauteil **6** mechanisch gekoppelt. Die Koppelzone **14**, über welchen eine mechanische Kopplung zwischen Sensorchip **1** und Bauteil **6** vermittelt wird, liegt an einer unteren Seite des Duroplast-Package **4** vor.

In Fig. 4 wird das Duroplast-Package **4** mit mindestens teilweise eingebettetem Sensorchip **1** über eine Verschraubung mit dem zu überwachenden Bauteil **6** mechanisch gekoppelt. Zu diesem Zweck weist das Duroplast-Package **4** Laschen **7** auf, durch welche eine Schraube **8** geführt wird. Die Koppelzone **14,** über welchen eine mechanische Kopplung zwischen Sensorchip **1** und Bauteil **6** vermittelt wird, liegt an einer unteren Seite des Duroplast-Package **4** vor. Vorteilhaft kontaktiert an der Koppelzone **14** das Duroplast-Package **4** unmittelbar das Bauteil **6.** Eine Zwischenschicht eines Klebers ist nicht notwendig, wodurch ein besonders hoher Anteil der im Bauteil **6** vorherrschenden mechanischen Spannungen von dem Bauteil **6** auf das Duroplast-Package **4** und weiter in den Sensorchip **1** eingeleitet werden kann.

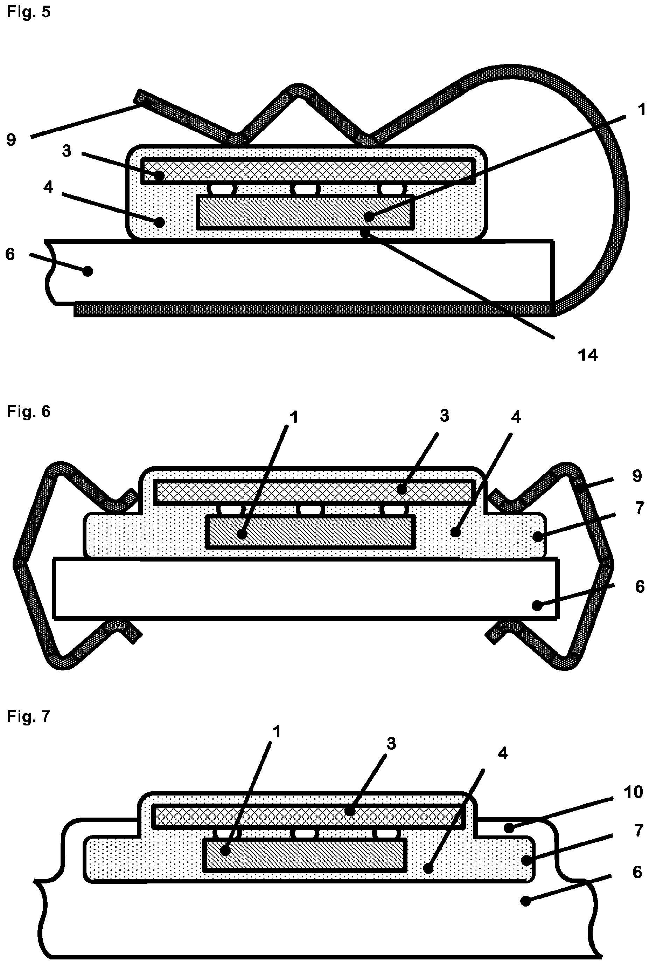

In Fig. 5 wird das Duroplast-Package **4** mit mindestens teilweise eingebettetem Sensorchip 1 mittels einer Verklemmung über einer Klammer **9** (z.B. einer Nonius-Klammer) am Bauteil **6** fixiert wird.

Fig. 6 illustriert ebenfalls eine Verklemmung des Duroplast-Package **4** mit mindestens teilweise eingebettetem Sensorchip **1** zur mechanischen Kopplung an ein Bauteil **6.** In der gezeigten Ausführungsform weist das Duroplast-Package **4** Laschen **7** auf, an welchen die elastische Klammer **9** ansetzt.

Fig. 7 illustriert eine bevorzugte mechanische Kopplung des Duroplast-Package **4** mit mindestens teilweise eingebettetem Sensorchip **1** an ein Bauteil **6** durch eine Klemmkraft durch Aufschrumpfen **10.** Beim Aufschrumpfen weist das Bauteil **6** eine Aufnahme für das Duroplast-Package **4** mit mindestens teilweise eingebettetem Sensorchip **1** auf, welche mit einer Übermaßpassung gefertigt ist. Die innere Form der Aufnahme korrespondiert zur Außenform des Duroplast-Package **4** ist bei Raumtemperatur jedoch geringfügig zu klein dimensioniert, als das Duroplast-Package **4** in die Aufnahme passen würde. Durch Erwärmen des Bauteils **6** kann die Aufnahme ausgedehnt werden, sodass das Duroplast-Package **4** eingebracht werden kann. Beim Erkalten des Bauteils **6** schließt sich selbiges an der Stelle der Aufnahme, um das Duroplast-Package **6**, sodass durch die Schrumpfung eine feste Pressverbindung bzw. Klemmkraft **10** geschaffen werden kann.

Vorteilhaft kann auch die illustrierte Verklemmung, Verschraubung oder Aufschrumpfung der Fig. 5-7 derart gestaltet werden, dass an einer Koppelzone das Duroplast-Package unmittelbar das Bauteil kontaktiert. Eine Zwischenschicht eines Klebers ist nicht notwendig, wodurch ein besonders hoher Anteil der im Bauteil vorherrschenden mechanischen Spannungen von dem Bauteil auf das Duroplast und weiter in den Sensorchip eingeleitet werden kann.

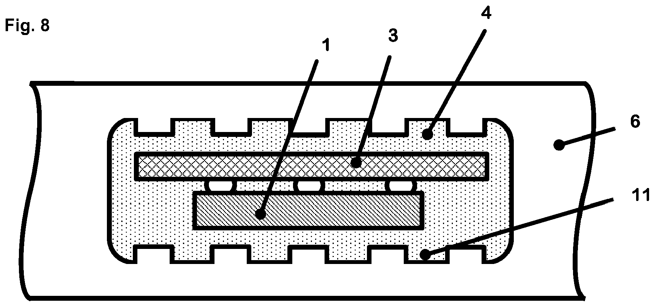

Fig. 8 illustriert eine mechanische Kopplung des Duroplast-Package **4** durch eine mindestens teilweise Integration in das Bauteil **6.** Zu diesem Zweck können insbesondere Spritzgießverfahren zum Einsatz kommen, bei denen der im Duroplast-Package eingebettete Sensorchip **1** im Zuge der Fertigung des Bauteils **6** mindestens teilweise von selbigem ummantelt wird. In der gezeigten Ausführungsform wird das Duroplast-Package **4** vollständig ummantelt. Bevorzugt ist das Bauteil **6** mindestens bereichsweise aus einem Thermoplast geformt, wobei der im Duroplast-Package **4** eingebettete Sensorchip **1** durch ein Thermoplast-Spritzgießverfahren in das Bauteil **6** integriert wurde.

Das Duroplast-Package **4** weist eine Oberflächenmodifizierung auf, um einen Formschluss bzw. eine Haftung an das Bauteil **6** (bevorzugt aus einem Thermoplast) zu erhöhen. In der gezeigten Ausführungsform erfolgt die Oberflächenmodifizierung durch ein gezieltes Einbringen von Verzahnungen **11,** welche im Wesentlichen senkrecht zur Oberfläche des Duroplast-Package **4** angeordnet vorliegen und eine Haftung bzw. Formschluss zum Bauteil **6** erhöhen.

### Bezugszeichenliste

- 1: Sensorchip
- 2: Kontaktierung Sensorchip -Schaltungsträger (z.B. FlipChip)
- 3: Schaltungsträger (z.B. Leiterplatte)
- 4: Duroplast-Package
- 5: Klebeschicht
- 6: Bauteil
- 7: Lasche eines Duroplast-Packages
- 8: Schraube
- 9: Klammer (z.B. Nonius-Klammer)
- 10: Klemmkraft durch Aufschrumpfen
- 11: Verzahnung für Formschluss Duroplast-Package mit dem Bauteil
- 12: Sensorelemente
- 13: Telemetrische Schnittstelle
- 14: Koppelzone
- 15: Elektronische Schaltung, beispielsweise ASIC

### Literaturverzeichnis

Gieschke P. , Y. Nurcahyo, M. Herrmann, M. Kuhl, P. Ruther and O. Paul, "CMOS Integrated Stress Mapping Chips with 32 N-Type or P-Type Piezoresistive Field Effect Transistors," 2009 IEEE 22nd International Conference on Micro Electro Mechanical Systems, Sorrento, Italy, 2009, pp. 769-772, doi: 10.1109/MEMSYS.2009.4805496.
Jaeger Richard.C., Suhling, Jeffrey C., Ramani, Ramanathan, Bradley, Arthur T. and Xu, Jianping,CMOS Stress Sensors on (100) Silicon, IEEE JOURNAL OF SOLID-STATE CIRCUITS, VOL. 35, NO. 1, JANUARY 2000.
Kuhl M., Gieschke, P., Rossbach, D., Hilzensauer, S., Panchaphongsaphak, T., Ruther, P., Lapatki, B., Paul, O., Manoli, Yi, "A Wireless Stress Mapping System for Orthodontic Brackets Using CMOS Integrated Sensors," in IEEE Journal of Solid-State Circuits, vol. 48, no. 9, pp. 2191-2202, Sept. 2013, doi: 10.1109/JSSC.2013.2264619.
Kunz, J. Kriechbeständigkeit - ein Kennwert für das Kriechverhalten, Kunststoffe 1/2004.

## Patentansprüche

1. Verfahren zur Kopplung eines Sensorchips (1) an ein Bauteil (6) zur Überwachung mechanischer Verformungen und/oder Spannungen umfassend die Schritte
a. Bereitstellung eines Sensorchips (1) umfassend ein oder mehrere auf das Bulk-Substrat aufgebrachte Sensorelemente (12) zur Messung einer auf den Sensorchip (1) einwirkenden mechanischen Verformung und/oder Spannung
b. Mindestens teilweises Verkapseln des Sensorchips (1) mit einem Duroplast-Material zur Bildung eines Duroplast-Package (4) mit mindestens teilweise eingebettetem Sensorchip (1)
c. Mechanische Kopplung des im Duroplast-Package (4) mindestens teilweise eingebetteten Sensorchips (1) an das zu überwachende Bauteil (6).

2. Verfahren gemäß dem vorherigen Anspruch
**dadurch gekennzeichnet, dass**
die mechanische Kopplung des im Duroplast-Package (4) eingebetteten Sensorchips (1) an das zu überwachende Bauteil (6) mittels einer Klebung, Verschraubung, Klemmung, Aufschrumpfung und/oder einer mindestens teilweise Integration in das Bauteil erfolgt.

3. Verfahren gemäß einem der vorherigen Ansprüche
**dadurch gekennzeichnet, dass**
das Bauteil (6) mindestens bereichsweise in einem Spritzgießverfahren geformt wird, wobei der im Duroplast-Package (4) eingebettete Sensorchip (1) in dem Spritzgießverfahren in das Bauteil (4) mindestens teilweise integriert wird.

4. Verfahren gemäß einem der vorherigen Ansprüche
**dadurch gekennzeichnet, dass**
das Bauteil (6) mindestens bereichsweise aus einem Thermoplast geformt wird, wobei der im Duroplast-Package (4) eingebettete Sensorchip(1) durch ein Thermoplast-Spritzgießverfahren in das Bauteil (6) mindestens teilweise integriert wird.

5. Verfahren gemäß einem der vorherigen Ansprüche
**dadurch gekennzeichnet, dass**
das mindestens teilweise Verkapseln des Sensorchips (1) mit einem Duroplast-Material durch ein Formgießen (*molding*) erfolgt, wobei bevorzugt ein Duroplast-Spritzgießen oder ein Transfer Molding oder ein Film Assisted Molding zum Einsatz kommt.

6. Verfahren gemäß einem der vorherigen Ansprüche
**dadurch gekennzeichnet, dass**
das Duroplast-Material Kunstharze umfasst, bevorzugt ausgewählt aus der Gruppe bestehend aus, Polyesterharze, Phenolharze, Epoxidharze, Acrylatharze und Silikonharze und/oder
das Duroplast-Material einen oder mehrere Füllstoffe umfasst, wobei die Füllstoffe besonders bevorzugt ausgewählt sind aus der Gruppe Glasfasern, Glasperlen, Wollastonit, Talkum, Kaolin und/oder Metalloxide, bevorzugt Aluminiumoxid.

7. Verfahren gemäß einem der vorherigen Ansprüche
**dadurch gekennzeichnet, dass**
das Duroplast-Material ein Epoxid-Gießharz (*Epoxy Molding Compound, EMC*) ist, umfassend bevorzugt ein Epoxidharz, ein Härter, einen Katalysator und/oder einen Füllstoff.

8. Verfahren gemäß einem der vorherigen Ansprüche
**dadurch gekennzeichnet, dass**
die mechanische Kopplung des im Duroplast-Package (4) eingebetteten Sensorchips (1) an das zu überwachende Bauteil (6) über eine durch das Duroplast-Package gebildete Koppelzone (14) erfolgt, wobei die Koppelzone (14) eine Dicke zwischen 50 µm und 1000 µm, bevorzugt 100 µm und 500 µm aufweist.

9. Verfahren gemäß einem der vorherigen Ansprüche
**dadurch gekennzeichnet, dass**
das Duroplast-Package (4) bei Raumtemperatur ein Elastizitätsmodul zwischen 10000 und 30000 N/mm² und/oder eine Kriechbeständigkeit als Verhältnis des Kriechmoduls nach 1000 h und nach 1 h von mindestens 0,6, bevorzugt mindestens 0,7, 0,8, 0,9, 0,95 oder mehr aufweist.

10. Verfahren gemäß einem der vorherigen Ansprüche
**dadurch gekennzeichnet, dass**
das Bulk-Substrat des Sensorchips (1) ein Halbleitermaterial umfasst, bevorzugt Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid und/oder
das Bulk-Substrat des Sensorchips (1) eine Dicke zwischen 20 µm und 600 µm, bevorzugt zwischen 200 µm und 400 µm aufweist.

11. Verfahren gemäß einem der vorherigen Ansprüche
**dadurch gekennzeichnet, dass**
die einen oder mehreren Sensorelemente (12) konfiguriert sind für eine resistive, bevorzugt eine piezoresistive, eine optische, eine magnetische, eine induktive und/oder eine kapazitive Messung von Verformungen und/oder Spannungen des Bulk-Substrates.

12. Verfahren gemäß einem der vorherigen Ansprüche
**dadurch gekennzeichnet, dass**
die einen oder mehreren Sensorelemente (12) piezoresistive Strukturen umfassen, bevorzugt piezoresistive Sensorbrücken und/oder
der Sensorchip (1) mehr als 5, 10, 15, 20, 30 oder mehr Sensorelemente (12) aufweist.

13. Verfahren gemäß einem der vorherigen Ansprüche
**dadurch gekennzeichnet, dass**
der Sensorchip (1) eine oder mehrerer induktive Spulen als telemetrische Schnittstelle (13) für eine bevorzugt bidirektionale Übertragung von Messwerten und/oder zur Versorgung mit Energie umfasst.

14. Duroplast-Package (4) zur mechanischen Kopplung eines Sensorchips (1) an ein Bauteil (6) zur Überwachung mechanischer Verformungen und/oder Spannungen,
**dadurch gekennzeichnet, dass**
der Sensorchip (1) ein oder mehrere Sensorelemente (12) zur Messung mechanischer Verformungen und/oder Spannungen auf einem Bulk-Substrat umfasst und in dem Duroplast-Package (4) mindestens teilweise eingebettet vorliegt, wobei das Duroplast-Package (4) mindestens eine Koppelzone (14) für die mechanische Kopplung des im Duroplast-Package (4) eingebetteten Sensorchips (1) an das zu überwachende Bauteil (6) aufweist.

15. System umfassend
a. ein Duroplast-Package (4) mit eingebettetem Sensorchip (1) gemäß dem vorherigen Anspruch
b. ein Bauteil (6)
wobei das Duroplast-Package (4) mit dem Bauteil (6) mechanisch gekoppelt vorliegt, sodass mittels des Sensorchips (1) eine Überwachung mechanischer Verformungen und/oder Spannungen des Bauteils (6) durchgeführt werden kann.
